(19) Europäisches Patentamt
European Patent Office
Office européen des brevets

(11) EP 3 077 574 B1

(12) FASCICULE DE BREVET EUROPEEN

(45) Date de publication et mention
de la délivrance du brevet:
04.10.2017 Bulletin 2017/40

(51) Int Cl.:
C25B 1/00 (2006.01)          C25B 1/06 (2006.01)
C25B 1/08 (2006.01)          C25B 3/00 (2006.01)
C25B 9/06 (2006.01)          C25B 11/04 (2006.01)
C25B 15/02 (2006.01)         C25B 15/08 (2006.01)
C07C 1/04 (2006.01)          C07C 1/12 (2006.01)

(21) Numéro de dépôt: 14815044.4

(22) Date de dépôt: 19.11.2014

(86) Numéro de dépôt international:
PCT/IB2014/066171

(87) Numéro de publication internationale:
WO 2015/083024 (11.06.2015 Gazette 2015/23)

(54) PROCÉDÉ DE FONCTIONNEMENT D'UN RÉACTEUR A EMPILEMENT DE TYPE SOEC POUR PRODUIRE DU MÉTHANE, EN L'ABSENCE D'ÉLECTRICITÉ DISPONIBLE

VERFAHREN ZUM BETRIEB EINES SOEC-STAPELREAKTORS ZUR HERSTELLUNG VON METHAN IN ABWESENHEIT VON VERFÜGBARER ELEKTRIZITÄT

METHOD FOR OPERATING AN SOEC-TYPE STACK REACTOR FOR PRODUCING METHANE IN THE ABSENCE OF AVAILABLE ELECTRICITY

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: 03.12.2013 FR 1362024

(43) Date de publication de la demande:
12.10.2016 Bulletin 2016/41

(73) Titulaire: Commissariat à l'Énergie Atomique
et aux Énergies Alternatives
75015 Paris (FR)

(72) Inventeurs:
• REYTIER, Magali
F-38250 Villard de Lans (FR)
• PETITJEAN, Marie
F-38000 Grenoble (FR)
• ROUX, Guilhem
F-38120 Saint-Egreve (FR)

(74) Mandataire: Nony
11 rue Saint-Georges
75009 Paris (FR)

(56) Documents cités:
DE-A1-102012 204 985     US-A1- 2012 282 534

**Description**

Domaine technique

La présente invention concerne la production de méthane par catalyse hétérogène.

Le procédé de production selon l'invention comporte au préalable une étape d'électrolyse de l'eau à haute température (EHT, ou EVHT pour électrolyse de la vapeur d'eau à haute température, ou HTE acronyme anglais pour « *High Temperature Electrolysis* », ou encore HTSE acronyme anglais pour « *High Temperature Steam Electrolysis* ») ou une étape dite de co-électrolyse de l'eau et dioxyde de carbone $CO_2$ à haute température, au sein d'un réacteur à empilement de cellules d'électrolyse de type SOEC (acronyme anglais pour « *Solid Oxyde Electrolyzer Cell* ») que l'on alimente en électricité.

L'invention a trait plus particulièrement à la production de méthane à partir de ce même réacteur en l'absence d'électricité disponible

Art antérieur

Parmi les solutions de stockage massif d'énergie déjà envisagées, le stockage hydraulique est déjà largement répandu. Les capacités restantes de ce type de stockage risquent d'être rapidement saturées. En outre, les systèmes hydrauliques nécessitent des conditions géographiques et géologiques particulières et peuvent de ce fait s'avérer assez onéreuses. Pour les problèmes de stockage à venir, le stockage hydraulique ne pourra donc être qu'une solution partielle.

Une solution alternative de stockage a également été envisagée : il s'agit du stockage par air comprimé (CAES acronyme anglais pour « *Compressed Air Energy Storage* »). Selon cette technologie, il est prévu de stocker de l'air comprimé produit avec l'électricité dans des cavités sous-terraines. Ces dernières exigent elles aussi des caractéristiques géologiques spécifiques, comme les cavités salines. Toutefois, le rendement de cette solution de stockage n'est pas satisfaisant.

L'hydrogène enfin est annoncé comme un vecteur d'énergie susceptible de pouvoir stocker massivement l'électricité dans certaines configurations : on peut citer ici le projet déjà réalisé en corse sous l'acronyme MYRTE (acronyme de Mission hYdrogène Renouvelable pour l'Intégration au Réseau Electrique) à l'initiative de la demanderesse.

Cependant, toutes ces solutions de stockage massif d'énergie requièrent des infrastructures importantes à développer (sites propres pour l'hydraulique, cavités sous-terraines, systèmes de stockage hydrogène). C'est pourquoi, plus récemment, le stockage massif d'énergie par conversion de l'électricité renouvelable en énergie chimique via la production de combustible de synthèse a fait une percée significative, représentant une alternative de stockage à fort potentiel. On peut citer ici la demande de brevet US 2009/0289227 qui évoque des solutions techniques de conversion.

Par ailleurs, réduire les émissions de dioxyde de carbone $CO_2$ résultant de l'utilisation d'énergies fossiles, valoriser autant que possible le $CO_2$ issu de l'utilisation de ces énergies plutôt que le stocker pour une durée indéterminée, utiliser à la demande l'électricité issue de sources d'énergie dite décarbonée, notamment lors des périodes de surproduction, transformer cette électricité en un produit stockable permettant éventuellement de produire de l'électricité à la demande lors des périodes de déficits de production sans avoir à faire appel à des énergies fortement carbonées sont autant d'objectifs à atteindre dans un souci d'efficacité globale.

La fabrication d'un gaz combustible de synthèse à partir d'un mélange de vapeur d'eau et de dioxyde de carbone $CO_2$, grâce à de l'électricité dite décarbonée, répond à ces objectifs.

L'électrolyse de la vapeur d'eau $H_2O$ pour produire de l'hydrogène H2 et/ou la co-électrolyse de $H_2O+CO_2$ à haute température au sein d'un électrolyseur à oxydes solides est une des possibilités. Les réactions d'électrolyse de la vapeur d'eau (I) et de co-électrolyse de $H_2O+CO_2$ (II) se font selon les équations suivantes :

$$\text{Electrolyse de l'eau: } H_2O \rightarrow H_2 + 1/2O_2 \qquad (I)$$

$$\text{Co-électrolyse: } CO_2 + H_2O \rightarrow CO + H_2 + O_2 \qquad (II).$$

Ainsi, l'électrolyse de la vapeur d'eau $H_2O$ permet une fabrication dite directe du gaz combustible par catalyse hétérogène par injection d'un mélange d'hydrogène $H_2$ produit selon l'électrolyse (I) et de dioxyde de carbone $CO_2$ sur un catalyseur.

La co-électrolyse de $H_2O+CO_2$ permet une fabrication dite indirecte du gaz combustible à partir du gaz de synthèse ($H_2$ + CO) produit selon la co-électrolyse (II).

Le gaz combustible ainsi fabriqué peut être un hydrocarbure et notamment du méthane, principal composant du gaz naturel.

La production du gaz naturel de synthèse donne la possibilité d'utiliser immédiatement toutes les infrastructures existantes développées pour cette énergie : réseaux de transport et de distribution, capacités de stockage, systèmes de production d'électricité, etc... En outre, il ressort également que le bilan carbone de cette production pourrait être nul, voire négatif, dès lors que l'électricité utilisée serait d'origine décarbonée et que le $CO_2$ serait issu de systèmes utilisant des énergies fossiles que l'on aurait préalablement capté.

Pour réaliser l'électrolyse de l'eau (I), il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur. Pour mettre en oeuvre l'électrolyse à haute température, il est connu d'utiliser un électrolyseur de type SOEC (acronyme anglais de « *Solid Oxide Electrolyzer Cell* »), constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau $H_2O$ dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène $H_2$ et des ions oxygène. Le dihydrogène est collecté et évacué en sortie de compartiment à hydrogène. Les ions oxygène $O^{2-}$ migrent à travers l'électrolyte et se recombinent en d’oxygène à l'interface entre l'électrolyte et l'électrode à oxygène (anode).

La co-électrolyse de la vapeur d'eau et du $CO_2$ (II) offre potentiellement les mêmes avantages énergétiques et économiques que ceux décrits ci-dessus pour l'électrolyse de la vapeur d'eau (réaction (I)). Son intérêt réside dans la possibilité de réaliser la réaction de co-électrolyse (II) dans un même réacteur en maintenant celui-ci dans une gamme de températures voisines de 800°C. En effet à cette température, les tensions requises pour la réduction du $CO_2$ en CO et de l'$H_2O$ en $H_2$ sont quasi identiques. A titre d'exemple, les tensions à l'abandon, c'est-à-dire les tensions électriques obtenues sans courant électrique mais uniquement grâce aux différents gaz de part et d'autre d'une cellule, pour un mélange de 90% d'espèce oxydée et 10% d'espèce réduite à 800°C sont respectivement égales à 0,852V pour les couples $H_2O$, $H_2/O_2$ et 0,844V pour les couples $CO_2$, $CO/O_2$.

De plus, la co-électrolyse à haute température présente le même intérêt énergétique que l'électrolyse de la vapeur d'eau entre 750 et 900°C par rapport à l'électrolyse de l'eau à basse température. En effet, l'énergie nécessaire à la dissociation des molécules $H_2O$ est diminuée de l'énergie de vaporisation. Par ailleurs, les cinétiques des réactions d'électrolyse de l'$H_2O$ et du $CO_2$ sont fortement thermiquement activées et suivent une loi d'Arrhenius avec des énergies d'activation de l'ordre de 120kj/mol.

Par conséquent, l'efficacité des réactions s'améliorent fortement lorsque la température est augmentée. La plus grande activité électrochimique à haute température permet en outre de s'affranchir de catalyseur onéreux, tel que le platine nécessaire à plus basses températures. En outre, la production de gaz de synthèse dans le compartiment cathodique du réacteur de co-électrolyse s'accompagne d'une production d'oxygène dans le compartiment anodique pouvant être valorisé par la suite, par exemple pour l'oxycombustion du gaz naturel.

Cela étant, si la co-électrolyse à haute température (II) telle qu'envisagée offre les avantages précités que sont l'investissement d'un unique réacteur d'électrolyse, le couplage thermique entre les différentes réactions, elle a pour inconvénient de ne pas permettre l'obtention de ratio $H_2/CO$ variable dans le gaz de mélange à la sortie du réacteur. Autrement dit, lorsqu'on réalise la co-électrolyse, un ratio $H_2/CO$ en sortie souhaitée impose un ratio $H_2O/CO_2$ donné en entrée. En effet, un fonctionnement proche du point de fonctionnement thermo-neutre fixe la tension à appliquer à l'électrolyseur. Ainsi, pour un ratio souhaité de $H_2/CO$ en sortie avec un taux de conversion de l'eau proche de 100%, les débits et compositions d'entrée en $CO_2$ et $H_2O$ doivent nécessairement être déterminés.

Or, chaque gaz de synthèse destiné à produire un gaz combustible nécessite un ratio $H_2/CO$ donné en fonction du combustible visé. De même, la fabrication directe du gaz combustible nécessite un ratio $CO_2/H_2$ donné en fonction du combustible visé.

Le tableau 1 ci-dessous illustre ainsi les ratios nécessaires en fonction de procédés de synthèse de différents combustibles :

**TABLEAU 1**

| PROCEDE DE SYNTHESE | PRODUIT COMBUSTIBLE OBTENU | RATIO H2/CO NECESSAIRE | RATIO CO2/H2 NECESSAIRE |
|---|---|---|---|
| synthèse du méthane | Gaz naturel | 1/3 | 1/4 |

(suite)

| PROCEDE DE SYNTHESE | PRODUIT COMBUSTIBLE OBTENU | RATIO H2/CO NECESSAIRE | RATIO CO2/H2 NECESSAIRE |
|---|---|---|---|
| synthèse du méthanol | Méthanol | 1/2 | 1/3 |
| synthèse du diméthyléther(DME) | DME | 1/1 | 1/2 |
| synthèse Ficher Tropsch | Diesel | 1/2 | 1/3 |

La demanderesse a proposé dans la demande de brevet déposée le 17 décembre 2012 sous le numéro FR 12 62174 un nouveau procédé et réacteur de co-électrolyse permettant d'obtenir en sortie un ratio $H_2/CO$ variable et donc un gaz de synthèse dont la composition est adaptée pour produire le gaz combustible souhaité.

Par ailleurs, le point de fonctionnement retenu pour un réacteur d'électrolyse ou de co-électrolyse fixe aussi les conditions thermiques dans le réacteur d'électrolyse. En effet, pour les électrolyses réalisées à haute température, l'énergie ΔH nécessaire à la dissociation de la molécule d'entrée ($H_2O$ ou $CO_2$) peut être apportée sous forme électrique et/ou de chaleur. L'énergie thermique apportée Q se définit alors en fonction de la tension U aux bornes de chaque cellule d'électrolyse par la relation :

$$Q = \frac{I}{2F} \Delta H - U \cdot I \,,$$

dans laquelle U est la tension électrique, I est le courant électrique et F est la constante de Faraday. Ainsi, on définit trois régimes de fonctionnement, correspondant à trois modes thermiques différents pour l'empilement de cellules d'électrolyse :

- le mode dit autothermique dans lequel la tension imposée Uimp est égale à ΔH / 2F. La chaleur consommée par la réaction de dissociation est complètement compensée par les différentes résistances électriques de l'électrolyseur (irréversibilités). Le réacteur d'électrolyse (électrolyseur) n'a pas besoin de gestion thermique particulière tout en restant stable en température.
- le mode dit endothermique dans lequel la tension imposée Uimp est inférieure à ΔH / 2F. L'électrolyseur consomme plus de chaleur que les pertes électriques en son sein. Cette chaleur nécessaire doit alors lui être apportée par un autre moyen, sous peine de voir sa température chuter irrémédiablement.
- le mode dit exothermique dans lequel la tension imposée Uimp est supérieure à ΔH / 2F. L'électrolyse consomme alors moins de chaleur que les pertes électriques par effet Joule. Ce dégagement de chaleur au sein de l'électrolyseur doit alors être évacué par un autre moyen, sous peine de voir sa température augmenter de manière rédhibitoire.

Le mode endothermique nécessite une consommation moindre d'électricité : il y a donc peu de production et il faut fournir de la chaleur au réacteur d'électrolyse. L'intérêt de ce mode endothermique réside dans la disponibilité d'une source de chaleur peu coûteuse. Tout dépend alors de la nature et de la température de cette source thermique.

A contrario, le mode exothermique nécessite une consommation plus importante d'électricité : il y a donc une production importante, mais il faut refroidir le réacteur d'électrolyse, ce qui peut être très coûteux. L'intérêt de ce mode exothermique dépend alors beaucoup du coût de l'électricité et de l'utilisation de la chaleur excédentaire.

Ainsi, la gestion thermique d'un réacteur d'électrolyse ou de co-électrolyse est un facteur important à prendre en considération.

En outre, le transport, le stockage et l'utilisation de l'hydrogène nécessitent sa mise en pression. Il est déjà connu qu'au lieu de comprimer l'hydrogène produit, ce qui présente un coût important, de réaliser l'électrolyse de l'eau directement à partir de vapeur d'eau sous pression, l'eau étant alors comprimée à l'état liquide au préalable, ce qui est beaucoup moins coûteux.

Différents procédés d'obtention d'un gaz combustible par catalyse hétérogène soit directement à partir d'un mélange d'$H_2$ et dioxyde de carbone $CO_2$, soit indirectement à partir d'un gaz de synthèse ($H_2$ + CO) ont déjà été étudiés.

En particulier, l'hydrogénation de $CO_2$ en méthane est un procédé industriel qui a été étudié à chaque choc énergétique, soit pour produire du méthane de synthèse à partir de $CO_2$ et $H_2$ purs, soit dans des centrales à gazéification du charbon avec des gaz et des conditions plus compliqués (procédé Fischer-Tropsch).

Pour le procédé de méthanation, deux voies sont possibles et ont été plus ou moins étudiées selon l'état de l'art.

La première voie est celle directe, avec une unique réaction selon l'équation suivante :

$$CO_2 + 4H_2 \rightarrow CH_4 + 2H_2O : \text{hydrogénation du } CO_2$$

La deuxième voie est celle indirecte, avec une réaction en deux étapes selon les équations suivantes :

$$CO_2 + H_2 \rightarrow CO + H_2O : \text{Réaction inverse du gaz à l'eau (RWGS),}$$

$$CO + 3H_2 \rightarrow CH_4 + H_2O : \textit{hydrogénation du CO.}$$

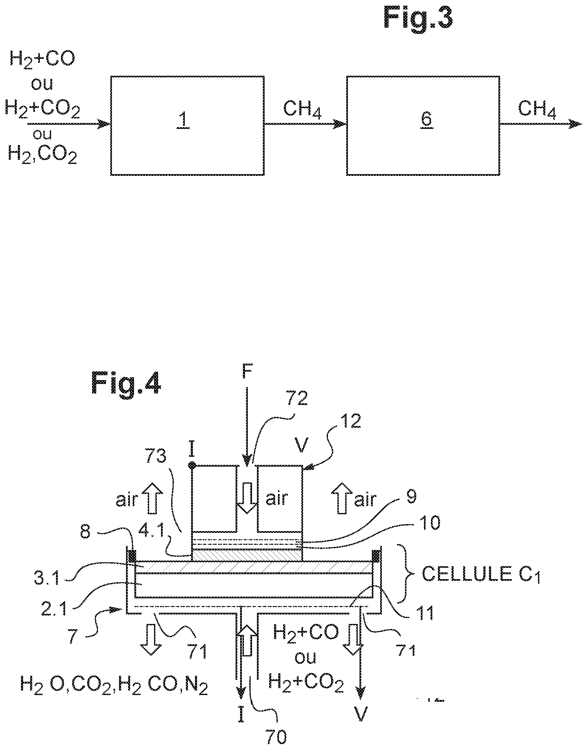

Comme mis en évidence par les auteurs de la publication [1] (voir notamment les figures 3 et 4), les réactions de méthanation sont favorisées à haute pression et à basse température selon la loi de Le Chatelier. En effet, les calculs thermodynamiques indiqués dans [1] indiquent une conversion théorique de 100% du $CO_2$ en $CH_4$ à moins de 150°C contre 83% à 400°C. Cependant, il est également indiqué qu'une température ainsi qu'une vitesse des gaz optimale sont à ajuster pour atteindre l'équilibre thermodynamique le plus intéressant en termes de taux de conversion du $CO_2$.

Les catalyseurs utilisés pour la méthanation sont en général à base de nickel (Ni) supporté par un oxyde de zirconium ($ZrO_2$), ou à base de Ni supporté par un oxyde d'aluminium ($Al_2O_3$). La publication [1] a mis en exergue l'activité catalytique importante pour un catalyseur à base de nickel (Ni) supporté par des oxydes mixtes de Cérium (Ce) et de zirconium de formule $Ce_{0.72}Zr_{0.28}O_2$. De même, la publication [2] a montré, pour une méthanation sous pression de 30 bars, l'excellente activité catalytique d'un catalyseur bimétallique à base de nickel (Ni) et de fer (Fe) supporté par un oxyde d'aluminium ($Al_2O_3$) de formule Ni-Fe/$\gamma$- $Al_2O_3$.

La production d'hydrogène ou de gaz de synthèse par électrolyse EHT ou co-électrolyse à haute température requiert par définition une électricité disponible en quantité suffisante.

Or, lorsque les sources d'énergie, dite décarbonées, sont par nature intermittentes (éolien, solaire), il peut se produire des situations dans lesquelles il n'est plus possible avec de telles sources, d'alimenter électriquement un réacteur d'électrolyse EHT ou de co-électrolyse à haute température, ou tout du moins en quantité suffisante pour que la mise en oeuvre soit effective.

Cela étant, une fois qu'un tel réacteur d'électrolyse EHT ou de co-électrolyse a été mis en fonctionnement, il est nécessaire d'en assurer le maintien en température, et ce malgré l'intermittence possible de la production d'électricité, de manière d'une part, à éviter un cyclage thermique pouvant l'endommager et d'autre part, à offrir des possibilités de mise en marche rapide dès la disponibilité à nouveau d'électricité.

Une solution qui a déjà été envisagée pour résoudre ce problème de maintien en température du réacteur en l'absence d'électricité disponible, est d'inverser son fonctionnement, c'est-à-dire de le faire fonctionner en pile à combustible SOFC (acronyme anglais pour « Solid Oxide Fuel Cell ») pour produire du courant à partir d'hydrogène $H_2$ ou de gaz de synthèse (mélange d'hydrogène $H_2$ et de monoxyde de carbone CO), ce qui permet de maintenir en température le réacteur. Cela présente l'inconvénient majeur de produire du courant électrique non pas à la demande mais, dès qu'il n'y a plus d'électricité disponible depuis les sources extérieures. En outre, un autre inconvénient majeur est que l'on consomme, c'est-à-dire qu'on brûle, ainsi du combustible, i.e. $H_2$ ou gaz de synthèse, uniquement à des fins de maintien en température du réacteur et sans obtention d'autre produit combustible mais uniquement d'électricité qui peut ne pas être utile à ce moment précis.

Il existe donc un besoin pour améliorer le procédé de fonctionnement d'un réacteur d'électrolyse EHT ou de co-électrolyse afin de le maintenir en température en l'absence d'électricité disponible, notamment sans avoir à l'inverser en pile à combustible SOFC et/ou sans avoir à brûler du combustible $H_2$ ou gaz de synthèse.

Le but de l'invention est de répondre au moins en partie à ce besoin.

Exposé de l'invention

Pour ce faire, l'invention concerne, sous l'un de ses aspects, Procédé de fonctionnement d'un réacteur, dit premier réacteur, comportant un empilement de cellules d'électrolyse élémentaires de type SOEC formées chacune d'une cathode, d'une anode et d'un électrolyte intercalé entre la cathode et l'anode, et une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires, les cathodes étant en matériau(x) catalyseur(s) de réaction de méthanation.

Selon l'invention, on réalise les étapes suivantes :

a/ on alimente électriquement le premier réacteur et, on alimente et on distribue à chaque cathode soit de la vapeur d'eau $H_2O$, soit un mélange de vapeur d'eau et de dioxyde de carbone $CO_2$, ou on alimente et on distribue de la vapeur d'eau à la cathode d'une des deux cellules élémentaires adjacentes et on alimente et on distribue du dioxyde de carbone à la cathode de l'autre des deux cellules élémentaires, de sorte à réaliser à chaque cathode soit une

electrolyse à hautes températures de la vapeur d'eau $H_2O$, soit une co-électrolyse à hautes températures de vapeur d'eau et de dioxyde de carbone,

b/ après l'étape a/ et <u>lorsque le premier réacteur est alimenté avec un niveau de courant électrique insuffisant pour mettre en oeuvre une électrolyse EHT ou une co-électrolyse de H2O et CO2 au sein du premier réacteur,</u> on alimente et on distribue à chaque cathode soit un mélange d'hydrogène $H_2$ et monoxyde de carbone CO, soit un mélange d'hydrogène $H_2$ et de dioxyde de carbone $CO_2$, de sorte à réaliser à chaque cathode une méthanation par catalyse hétérogène.

Par « absence d'alimentation électrique », on entend ici et dans le cadre de l'invention, un niveau de courant électrique insuffisant pour mettre en oeuvre une électrolyse EHT ou une co-électrolyse de $H_2O$ et $CO_2$ au sein du réacteur SOEC à empilement. <u>Ce courant électrique insuffisant peut être proche de zéro voire nul.</u>

L'invention consiste ainsi, <u>avec un niveau d'alimentation électrique insuffisant voire</u> en l'absence <u>totale</u> d'électricité, à injecter du gaz de synthèse $H_2+CO$ ou un mélange $H_2+CO_2$ en entrée de cathodes du réacteur à empilement de manière à produire du méthane au sein même du réacteur. La réaction catalytique de méthanation étant exothermique, le réacteur à empilement peut donc être maintenu en température, sans perte de combustible, c'est-à-dire sans que celui-ci soit brûlé. Le combustible utilisé pour la méthanation (gaz de synthèse ou hydrogène) peut avantageusement être celui produit au préalable durant les phases de fonctionnement avec de l'électricité disponible.

Ainsi, selon l'invention, le fonctionnement du réacteur est bi-mode en quelque sorte, c'est-à-dire en (co-) électrolyseur ou en réacteur de méthanation.

En effet, lorsque l'électricité est disponible en quantité suffisante pour le réacteur, l'hydrogène $H_2$ ou le gaz de synthèse ($H_2+CO$) est produit respectivement par électrolyse de vapeur d'eau $H_2O$ ou par co-électrolyse de $H_2O+CO_2$.

En l'absence de courant électrique disponible, du gaz de synthèse ($H_2+CO$) ou de l'hydrogène $H_2$ avec du $CO_2$ alimente l'entrée des cathodes de l'empilement de manière à fabriquer du méthane ($CH_4$) in situ. Le fonctionnement possible en bi-mode du réacteur selon l'invention permet aussi d'envisager d'utiliser exclusivement ce dernier en réacteur de méthanation en cas de défaillance électrique de l'empilement.

Par ailleurs, grâce à l'invention, l'inversion du fonctionnement du réacteur c'est-à-dire du fonctionnement en électrolyseur ou en co-électrolyseur en pile à combustible SOFC, peut être faite à souhait, à la demande lors d'un besoin en électricité, et non pas de manière imposée dans le but unique d'assurer la maîtrise thermique du réacteur en l'absence d'électricité.

On précise ici que, les dispositifs d'interconnexion, électrique et fluidique, aussi appelés interconnecteurs ou encore plaques d'interconnexion, sont les dispositifs qui assurent la connexion en série d'un point de vue électrique de chaque cellule d'électrolyse dans l'empilement des réacteurs EHT et en parallèle d'un point de vue fluidique, combinant ainsi la production de chacune des cellules. Les interconnecteurs assurent ainsi les fonctions d'amenée et de collecte de courant et délimitent des compartiments de circulation (distribution et/ou la collecte) des gaz.

Les cellules d'électrolyse sont avantageusement de type à cathode support. Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell* », c'est-à-dire une cellule dans laquelle l'électrolyte et l'électrode à oxygène (anode) sont disposées sur l'électrode à hydrogène ou à monoxyde de carbone (cathode) plus épaisse qui sert donc de support.

Pour l'étape a/, on peut avantageusement réaliser la co-électrolyse de vapeur d'eau et du dioxyde de carbone dans le réacteur à empilement selon l'enseignement de la demande FR 12 62174 précitée : on alimente et on distribue la vapeur d'eau à la cathode d'une des deux cellules élémentaires adjacentes et on alimente et on distribue du dioxyde de carbone à la cathode de l'autre des deux cellules élémentaires. Cela permet de faire varier à souhait le ratio $H_2$/CO obtenu en sortie avant son mélange pour constituer le gaz de synthèse converti en gaz combustible dans l'enceinte, et de faciliter la gestion thermique de l'empilement des cellules d'électrolyse quel que soit le mode de fonctionnement (mode endothermique ou exothermique), et ce, de manière réversible en fonction du coût du courant.

Selon un mode de réalisation avantageux, l'hydrogène $H_2$ ou le mélange d'hydrogène $H_2$ et monoxyde de carbone CO alimentant les cathodes lors de l'étape b/, est produit au préalable lors de l'étape a/.

De préférence, l'étape a/ est réalisée à des températures comprises entre 600°C et 1000°C.

De préférence également, l'étape a/ étant réalisée à des pressions comprises entre 0 et 100 bars, de préférence comprise entre 4 et 80 bars.

Selon une variante avantageuse, l'étape b/ est réalisée à des pressions comprises entre 0 et 100 bars, de préférence comprise entre 4 et 80 bars.

Les cathodes sont de préférence à base de nickel (Ni) supporté par de la zircone ($ZrO_2$), de préférence stabilisée à l'oxyde d'yttrium ($Y_2O_3$) ou à base de Ni supportée par de la cérine, telle que la cérine gadoliniée (Ni-CGO).

Avantageusement, un gaz drainant, tel que l'air, circule à chaque anode, lors de l'étape a/.

Avantageusement encore, un gaz drainant, tel que l'air, circule à chaque anode, lors de l'étape b/. Le débit de gaz drainant à chaque anode est de préférence adapté au débit à la cathode pour gérer la thermique et l'équilibrage des pressions dans chacune des chambres.

L'invention a également pour objet, selon un autre aspect, un procédé de production de méthane mettant en oeuvre le procédé de fonctionnement qui vient d'être décrit, comprenant l'étape suivante :

c/ on alimente, en méthane produit à la sortie du premier réacteur (SOEC), un deuxième réacteur adapté à mettre en oeuvre une méthanation, lorsque le taux de conversion du méthane en sortie du premier réacteur est inférieur à une valeur seuil, puis on alimente en méthane produit à la sortie du deuxième réacteur, un réservoir de stockage ou un réseau de distribution.
ou

c'/ on alimente, directement en méthane produit à la sortie du premier réacteur, un réservoir de stockage ou un réseau de distribution. L'alimentation en méthane du deuxième réacteur se fait également en ajoutant le mélange $H_2$ + CO (ou $CO_2$) non convertis.

L'invention a enfin pour objet un procédé de production de méthane $CH_4$, de préférence selon le procédé précédent, à partir d'une source d'énergie dite intermittente, mettant en oeuvre le procédé de fonctionnement décrit ci-avant, l'étape b/ étant mise en oeuvre lorsque ladite source intermittente n'est plus apte à produire de l'électricité en une quantité suffisante pour réaliser l'étape a/.

Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :

- la figure 1 est une vue schématique montrant le principe de fonctionnement d'un électrolyseur d'eau à haute température,
- la figure 2 est une vue schématique en éclaté d'une partie d'un électrolyseur de vapeur d'eau à haute température comprenant des interconnecteurs,
- la figure 3 est une vue schématique d'un procédé de production de méthane à partir de l'étape b/ de méthanation du procédé d'un réacteur SOEC selon l'invention,
- la figure 4 est une vue schématique d'un réacteur SOEC expérimental à cellule électrochimique unique permettant de mettre en oeuvre l'étape b/ de méthanation du procédé selon l'invention,
- les figures 5A à 5C illustrent la production des différentes espèces lors de l'étape b/ de méthanation du procédé selon l'invention, à partir de gaz de synthèse, et à des pressions respectives de 1 bar, 5 bars et 30 bars,
- les figures 6A à 6C illustrent la production des différentes espèces lors l'étape b/ de méthanation du procédé selon l'invention, à partir d'un mélange $H_2$ et $CO_2$, et à des pressions respectives de 1 bar, 5 bars et 30 bars,

Dans l'ensemble de la présente demande, les termes « vertical », « inférieur », « supérieur », « bas », « haut », « dessous » et « dessus » sont à comprendre par référence par rapport à un réacteur SOEC tel qu'il est en configuration verticale de fonctionnement.

De même, dans l'ensemble de la présente demande, les termes « entrée », « sortie » « aval » et « amont » sont à comprendre en référence au sens de circulation des gaz depuis leur entrée dans le réacteur SOEC jusqu'à leur sortie de celle-ci.

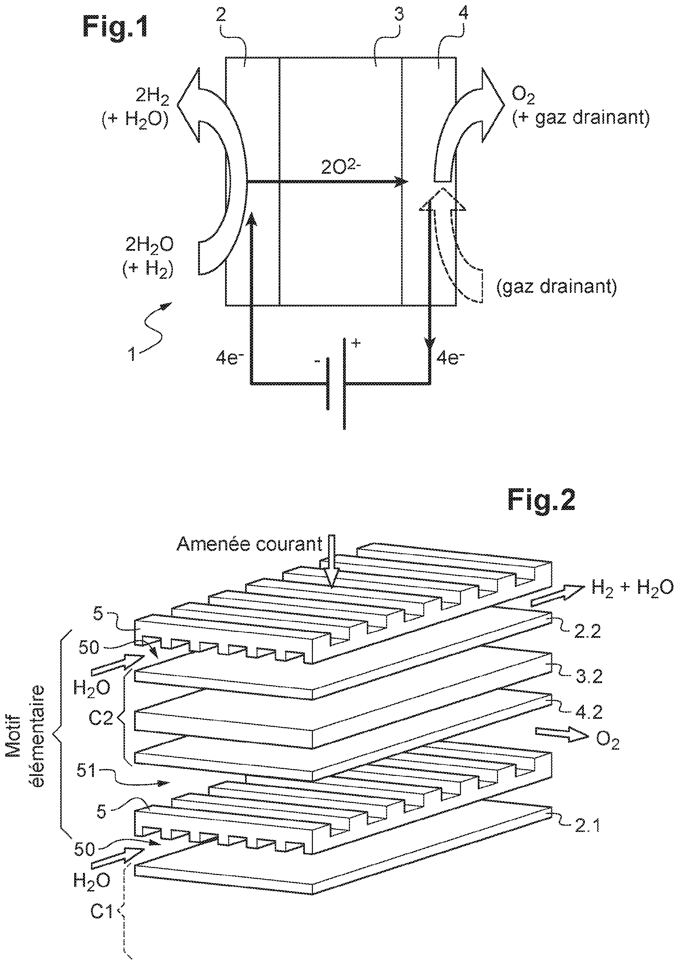

On précise que sur les figures 1 à 3, les symboles et les flèches d'alimentation de vapeur d'eau $H_2O$, de distribution et de récupération de dihydrogène $H_2$ et d'oxygène $O_2$, et du courant, de dioxyde de carbone $CO_2$, de distribution et de récupération de monoxyde de carbone CO et d'oxygène $O_2$ et du courant, et du méthane $CH_4$ sont montrés à des fins de clarté et de précision, pour illustrer le fonctionnement d'un réacteur 1 SOEC selon l'invention et d'un réacteur de méthanation 6 distinct.

On précise également que tous les réacteurs fonctionnant selon les étapes a/ et b/ du procédé selon l'invention décrits sont de type à oxydes solides (SOEC, acronyme anglais de « *Solid Oxyde Electrolyte Cell* ») fonctionnant à haute température. Ainsi, tous les constituants (anode/électrolyte/cathode) d'une cellule d'électrolyse sont des céramiques.

De tels constituants peuvent être ceux d'une pile à combustible SOFC. La haute température de fonctionnement du réacteur 1 lors de l'électrolyse ou de la co-électrolyse est typiquement comprise entre 600°C et 1000°C.

Typiquement, les caractéristiques d'une cellule d'électrolyse élémentaire SOEC convenant à l'invention, du type cathode support (CSC), peuvent être celles indiquées comme suit dans le tableau 2 ci-dessous.

TABLEAU 2

| Cellule d'électrolyse | Unité | Valeur |
|---|---|---|
| **Cathode 2** | | |
| Matériau constitutif | | Ni-YSZ |
| Epaisseur | $\mu$m | 315 |
| Conductivité thermique | W m$^{-1}$ K$^{-1}$ | 13,1 |
| Conductivité électrique | $\Omega^{-1}$ m$^{-1}$ | $10^5$ |
| Porosité | | 0,37 |
| Perméabilité | m$^2$ | $10^{-13}$ |
| Tortuosité | | 4 |
| Densité de courant | A.m$^{-2}$ | 5300 |
| | | |
| **Anode 4** | | |
| Matériau constitutif | | LSM |
| Epaisseur | $\mu$m | 20 |
| Conductivité thermique | W m$^{-1}$ K$^{-1}$ | 9,6 |
| Conductivité électrique | $\Omega^{-1}$ m$^{-1}$ | $1\ 10^4$ |
| Porosité | | 0,37 |
| Perméabilité | m$^2$ | $10^{-13}$ |
| Tortuosité | | 4 |
| Densité de courant | A.m$^{-2}$ | 2000 |
| **Electrolyte 3** | | |
| Matériau constitutif | | YSZ |
| Epaisseur | $\mu$m | 5 |
| Résistivité | $\Omega$ m | 0,42 |

Un électrolyseur d'eau est un dispositif électrochimique de production d'hydrogène (et d'oxygène) sous l'effet d'un courant électrique.

Dans les électrolyseurs à haute température EHT, l'électrolyse de l'eau à haute température est réalisée à partir de vapeur d'eau. La fonction d'un électrolyseur haute température EHT est de transformer la vapeur d'eau en hydrogène et en oxygène selon la réaction suivante:

$$2H_2O \rightarrow 2H_2 + O_2.$$

Cette réaction est réalisée par voie électrochimique dans les cellules de l'électrolyseur. Comme schématisée en figure 1, chaque cellule d'électrolyse élémentaire 1 est formée d'une cathode 2 et d'une anode 4, placées de part et d'autre d'un électrolyte solide 3. Les deux électrodes (cathode et anode) 2, 4 sont des conducteurs électroniques, en matériau poreux, et l'électrolyte 3 est étanche au gaz, isolant électronique et conducteur ionique. L'électrolyte peut être en particulier un conducteur anionique, plus précisément un conducteur anionique des ions $O^{2-}$ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

$$2H_2O + 4e^- \rightarrow 2H_2 + 2O^{2-}.$$

A l'anode 4, la demi-réaction est la suivante:

$$2O^{2-} \rightarrow O_2 + 4e^-.$$

L'électrolyte 3 intercalé entre les deux électrodes 2, 4 est le lieu de migration des ions $O^{2-}$, sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène $H_2$ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

Un fonctionnement satisfaisant d'un électrolyseur EHT nécessite:

- une bonne isolation électrique entre deux interconnecteurs adjacents dans l'empilement, sous peine de court-circuiter la cellule d'électrolyse élémentaire intercalée entre les deux interconnecteurs,
- un bon contact électrique et une surface de contact suffisante entre chaque cellule et interconnecteur, afin d'obtenir la plus faible résistance ohmique entre cellule et interconnecteurs,
- une bonne étanchéité entre les deux compartiments distincts, i.e. et cathodique, sous peine de recombinaison des gaz produits entraînant une baisse de rendement et surtout l'apparition de points chauds endommageant l'électrolyseur,
- une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires C1, C2, de type à oxyde solide (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2....

L'interconnecteur 5 est un composant en alliage métallique qui assure la séparation entre les compartiments cathodique 50 et anodique 51, définis par les volumes compris entre l'interconnecteur 5 et l'anode adjacente 4.2 et entre l'interconnecteur 5 et la cathode adjacente 2.1 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 50 en aval de la cellule C1, C2... après dissociation de la vapeur d'eau par celle-ci. Le collectage de l'oxygène produit à l'anode 4.2 est effectué dans le compartiment anodique 51 en aval de la cellule C1, C2... après dissociation de la vapeur d'eau par celle-ci.

L'interconnecteur 5 assure le passage du courant entre les cellules C1 et C2 par contact direct avec les électrodes adjacentes, c'est-à-dire entre l'anode 4.2 et la cathode 2.1.

Dans les co-électrolyseurs à haute température EHT, la co-électrolyse à haute température est réalisée à partir de vapeur d'eau et de dioxyde de carbone $CO_2$. La fonction d'un co-électrolyseur haute température SOEC est de transformer la vapeur d'eau et le $CO_2$ en hydrogène, monoxyde de carbone et en oxygène selon la réaction suivante:

$$CO_2 + H_2O \rightarrow CO + H_2 + O_2.$$

Un co-électrolyseur 1 peut comporter exactement les mêmes constituants à oxydes solides (SOEC) qu'un électrolyseur EHT qui vient d'être décrit. Usuellement, la vapeur d'eau et le dioxyde de carbone $CO_2$ sont mélangés avant l'entrée dans le co-électrolyseur et injectés simultanément dans chaque compartiment cathodique 50.

Actuellement, lorsqu'on souhaite réaliser une méthanation par catalyse hétérogène, deux voies sont possibles. La première voie est celle directe, avec une unique réaction selon l'équation suivante :

$$CO_2 + 4H_2 \rightarrow CH_4 + 2H_2O.$$

La deuxième voie est celle indirecte, avec une réaction en deux étapes selon les équations suivantes :

$$CO_2 + H_2 \rightarrow CO + H_2O$$

$$CO + 3H_2 \rightarrow CH_4 + H_2O.$$

La méthanation est mise en oeuvre dans un réacteur au sein duquel est présent le catalyseur solide de la réaction.

L'hydrogène et le cas échéant le monoxyde de carbone peuvent être produits au préalable soit par électrolyse EHT dans un réacteur d'électrolyse 1 décrit en référence aux figures 1 à 3, soit par co-électrolyse à haute température également dans un réacteur de co-électrolyse 1 décrit.

Il est envisagé de réaliser l'électrolyse EHT ou de co-électrolyse à haute température de la vapeur d'eau $H_2O$ et du dioxyde de carbone $CO_2$, avec des énergies dite décarbonée qui sont par nature intermittente (éolien, solaire).

Cependant, avec de telles énergies, la production d'électricité peut être interrompue, ou tout du moins être réduite à un faible niveau, sur des périodes plus ou moins longues et qui peuvent être impromptues.

Dans ces conditions, l'électrolyse EHT ou la co-électrolyse ne peut plus être assurée par le réacteur SOEC 1 du fait de l'absence de courant électrique (tension).

Or, en cas d'impossibilité de faire l'électrolyse ou la co-électrolyse, il est nécessaire de pouvoir maintenir en température le réacteur 1 SOEC afin d'une part, d'éviter un cyclage thermique pouvant l'endommager et d'autre part de permettre une remise en marche rapide dès que le courant électrique est à nouveau disponible.

Pour résoudre ce problème, les inventeurs de la présente invention ont pensé à alimenter et à distribuer à chaque cathode 2.1, 2.2, ....soit un mélange d'hydrogène $H_2$ et monoxyde de carbone CO, soit un mélange d'hydrogène $H_2$ et de dioxyde de carbone $CO_2$, de sorte à réaliser à chaque cathode une méthanation par catalyse hétérogène.

Autrement dit, en l'absence d'électricité disponible, on assigne au réacteur 1 SOEC une fonction supplémentaire de réacteur de méthanation.

Autrement dit encore, le fonctionnement du réacteur SOEC 1 est bi-mode :

- électrolyse EHT ou co-électrolyse de $H_2O$ et $CO_2$ lorsque l'électricité est disponible en quantité suffisante,
- méthanation, en cas d'absence de courant disponible, ou tout du moins à un niveau insuffisant pour mettre en oeuvre une réaction d'électrolyse EHT ou de co-électrolyse.

De manière judicieuse, les inventeurs sont partis de la constatation que certains matériaux de cathode à oxyde solides, en particulier ceux à base de nickel (Ni) supporté par de la zircone ($ZrO_2$), utilisés dans les réacteurs SOEC étaient également éprouvés en tant que catalyseurs solides de la réaction de méthanation.

Le fonctionnement de méthanation d'un réacteur SOEC 1 permet d'envisager une production de méthane en l'absence d'électricité : Ainsi, le méthane $CH_4$ produit en sortie du réacteur 1 alimente:

- soit un deuxième réacteur 6, apte à mettre en oeuvre une méthanation, en méthane produit à la sortie du premier réacteur lorsque le taux de conversion de ce dernier est inférieur à une valeur seuil, puis on alimente en méthane produit à la sortie du deuxième réacteur, un réservoir de stockage ou un réseau de distribution, tel qu'illustré en figure 3;
- soit directement un réservoir de stockage ou un réseau de distribution de méthane.

Les inventeurs de la présente invention ont réalisé un réacteur 1 à cellule unique C1 à oxydes solides pour prouver expérimentalement la méthanation au sein d'un tel réacteur.

Le réacteur 1 expérimental est montré en figure 4. Il comporte une cellule C1 constituée d'une cathode 2.1, d'une anode 4. 1 et d'un électrolyte 3.1 intercalé entre la cathode 2.1 et l'anode 4.1.

La cathode 2.1 utilisée concernée est un cermet de diamètre 50mm et est constituée d'un empilement de deux couches, à savoir :

- une couche support en Ni-3YSZ ($ZrO_2$ + 3% mol. $Y_2O_3$), d'épaisseur 500 $\mu$m,
- une couche fonctionnelle en Ni-8YSZ ($ZrO_2$ + 8% mol. $Y_2O_3$), d'épaisseur comprise entre 5 et 10 $\mu$m.

L'électrolyte 3.1 est en 8YSZ ($ZrO_2$ + 8% mol. $Y_2O_3$), d'épaisseur 5 $\mu$m.

L'anode 4.1 est en LSCo (cobaltite de lanthane dopée strontium), d'épaisseur 20$\mu$m.

La cellule C1 est montée dans un boitier-support 7 en alumine ($Al_2O_3$). Le montage de la cellule C1 est étanche au moyen d'un joint 8 en verre à la périphérie de l'électrolyte 3.1. Le montage de la cellule C1 est en outre sous compression d'une charge maximale de 2 kg/cm$^2$ comme illustré par la flèche F en figure 4.

Le boitier 7 présente dans sa partie inférieure une ouverture centrale 70 d'alimentation en gaz (gaz de synthèse ou mélange $H_2$ et $CO_2$) ainsi qu'une ouverture 71 de récupération de gaz obtenu par la réaction au sein de la cathode 2.1.

Il présente également, dans sa partie supérieure, une ouverture centrale 72 d'alimentation en gaz drainant (air) à l'anode 4.1 et une ouverture 73 d'évacuation du gaz drainant.

Différentes grilles de contact 9, 10, 11 sont agencées en contact respectivement avec l'anode 4.1 et la cathode 2.1. Plus précisément, la grille 11 en contact avec la cathode 2.1 est en Nickel, d'épaisseur égale à 0,45 mm, avec 100 mailles/cm$^2$ et un diamètre unitaire de fil de 0,22 mm. Les grilles de contact 9, 10 sont quant à elles en Or et en Platine.

Comme illustré en figure 4, les grilles 9, 10, 11 permettent une alimentation électrique en courant I et/ou en tension U de la cellule C1 afin qu'elle mette en oeuvre une réaction d'électrolyse EHT ou de co-électrolyse de vapeur d'eau $H_2O$ et de $CO_2$.

On a injecté soit un gaz de synthèse ($H_2$+CO) soit un mélange $H_2$+$CO_2$ en entrée 70 de cathode 2.1 et simultanément de l'air en entrée 72 d'anode 4.1, sans polariser la cellule

L'analyse des gaz a été réalisée, après condensation des gaz pour éliminer $H_2O$, par micro-chromatographie gazeuse au moyen de l'appareil commercialisé par la société SRA sous la dénomination « MicroGC 3000 ».

On a réalisé deux séries de mesure avec deux types de cellule C1 différents à partir de mêmes matériaux mais de fabricants différents.

Les résultats de mesure ainsi que des calculs sont reproduits ci-après aux tableaux 3 et 4 chacun pour un type de cellule. On précise que la valeur totale de la composition des gaz est légèrement supérieure à 100% du fait des incertitudes de mesure.

TABLEAU 3

| Températur e de cellule (°C) | Débit total d'entré e (NL/h) | Composition des gaz d'entrée (%Vol) | | | | Composition mesurée des gaz de sortie (%Vol) | | | | | | | Composition calculée des gaz de sortie avec H2O (%Vol) | | | | | | | |
|---|---|---|---|---|---|---|---|---|---|---|---|---|---|---|---|---|---|---|---|---|
| | | %H2 | %CO | %CO2 | %N2 | %H2 | %O2 | %N2 | %CH4 | %CO | %CO2 | Total brut | %H2 | %O2 | %N2 | %CH4 | %CO | %CO2 | %H2O | Total brut |
| 600 | 8,17 | 75 | 25 | - | - | 65,1 | 0,1 | 2,2 | 9,5 | 19,3 | 5,9 | 102,2 | 59,5 | 0,1 | 2,0 | 8,7 | 17,7 | 5,4 | 8,7 | 102,2 |
| 600 | 8,17 | 80 | - | 20 | - | 71,0 | 0,1 | 1,8 | 3,8 | 11,8 | 12,8 | 101,3 | 66,0 | 0,1 | 1,7 | 3,6 | 10,9 | 11,9 | 7,1 | 101,3 |

EP 3 077 574 B1

12

## TABLEAU 4

| Débit air (Nl/h) | Température de cellule (°C) | | Débit total d'entrée (NL/h) | Composition des gaz d'entrée (%Vol) | | | | Composition mesurée des gaz de sortie (%Vol) | | | | | | | Composition calculée des gaz de sortie avec H2O (%Vol) | | | | | | | |
|---|---|---|---|---|---|---|---|---|---|---|---|---|---|---|---|---|---|---|---|---|---|---|
| | T1 | T2 | | %H2 | %CO | %CO2 | %N2 | %H2 | %O2 | %N2 | %CH4 | %CO | %CO2 | Total brut | %H2 | %O2 | %N2 | %CH4 | %CO | %CO2 | %H2O | Total brut |
| 43,58 | 616,3 | 603,2 | 8,17 | 75 | 25 | - | - | 62,1 | 0,0 | 3,8 | 13,2 | 15,4 | 6,1 | 100,7 | 54,9 | 0,0 | 3,4 | 11,7 | 13,6 | 5,4 | 11,7 | 100,7 |
| 30 | 616,7 | 604,3 | 8,17 | 75 | 25 | - | - | 62,8 | 0,0 | 3,0 | 12,9 | 15,7 | 6,3 | 100,6 | 55,7 | 0,0 | 2,7 | 11,4 | 13,9 | 5,6 | 11,4 | 100,6 |

De ces tableaux 3 et 4, on peut en conclure tout d'abord que la cellule C1 réalise effectivement une réaction de méthanation.

On peut en conclure également que la cellule C1 et donc le réacteur 1 subit un échauffement significatif lors de la méthanation, d'autant plus important que le débit d'air à l'anode est faible.

Par conséquent, on peut avantageusement ajuster le débit de gaz drainant (air) aux anodes d'un réacteur SOEC pour contrôler, par convection forcée, l'élévation de température due à la méthanation et préserver ainsi les cellules SOEC d'un échauffement trop important.

Les inventeurs de la présente invention ont réalisé des calculs thermodynamiques comme suit pour corroborer la faisabilité expérimentale de la méthanation avec les gaz $CO_2$, CO, $H_2$ et $H_2O$.

Ils ont d'abord considéré les trois réactions intervenant lors de la méthanation du $CO_2$ (et CO), qui sont:

$$CO_2 + 4H_2 \leftrightarrow CH_4 + 2H_2O \text{ méthanation du } CO_2 \qquad (1),$$

$$CO + 3H_2 \leftrightarrow CH_4 + H_2O \text{ méthanation du CO} \qquad (2),$$

$$CO_2 + H_2 \leftrightarrow CO + H_2O \text{ RWGS (Reverse Water Gas Shift)} \qquad (3).$$

L'analyse thermodynamique, comme faite dans la publication [3], a été réalisée en résolvant le système :

$$\begin{cases} \dfrac{P_{CH_4} P_{H_2O}^2}{P_{H_2}^4 P_{CO_2}} - K_{CO_2}^p = 0 \\[3ex] \dfrac{P_{H_2} P_{CO_2}}{P_{CO} P_{H_2O}} - K_{RWGS}^p = 0 \end{cases} \qquad (4)$$

avec les constantes d'équilibre qui s'écrivent:

$$K_{CO_2}^p = \frac{P_{H2O}^2 P_{CH4}}{P_{H2}^4 P_{CO2}} = \left[ 7.24E^{10} \exp\left(\frac{-21646}{T}\right) \right]^{-1} \qquad (5)$$

$$K_{CO}^p = \frac{P_{H2O} P_{CH4}}{P_{H2}^3 P_{CO}} = \left[ 1.22E^{13} \exp\left(\frac{-26830}{T}\right) \right]^{-1} \qquad (6)$$

$$K_{RWGS}^p = \frac{P_{H2O} P_{CO}}{P_{H2} P_{CO2}} = \left[ 1.26E^{-2} \exp\left(\frac{4639}{T}\right) \right]^{-1} \qquad (7)$$

La température T est donnée en degrés Kelvin, et l'unité des constantes d'équilibre $K^p$ en bar[-1].

Les expressions des cinétiques de réaction sont les suivantes :

$$r_{CO_2} = -\frac{k_{CO_2}}{P_{H_2}^{3.5}} \left( P_{CH_4} P_{H_2O}^2 - \frac{P_{H_2}^4 P_{CO_2}}{K_{CO_2}^p} \right) \cdot \frac{1}{\left( 1 + K_{CO}^{ad} P_{CO} + K_{H_2}^{ad} P_{H_2} + K_{CH_4}^{ad} P_{CH_4} + \dfrac{K_{H_2O}^{ad} P_{H_2O}}{P_{H_2}} \right)} \qquad (8)$$

$$r_{CO} = -\frac{k_{CO}}{P_{H_2}^{2.5}}\left( P_{CH_4} P_{H_2O} - \frac{P_{H_2}^3 P_{CO}}{K_{CO}^p} \right) \cdot \frac{1}{\left( 1 + K_{CO}^{ad} P_{CO} + K_{H_2}^{ad} P_{H_2} + K_{CH_4}^{ad} P_{CH_4} + \frac{K_{H_2O}^{ad} P_{H_2O}}{P_{H_2}} \right)} \quad (9)$$

$$r_{RWGS} = -\frac{k_{RWGS}}{P_{H_2}}\left( P_{CO} P_{H_2O} - \frac{P_{H_2} P_{CO_2}}{K_{RWGS}^p} \right) \cdot \frac{1}{\left( 1 + K_{CO}^{ad} P_{CO} + K_{H_2}^{ad} P_{H_2} + K_{CH_4}^{ad} P_{CH_4} + \frac{K_{H_2O}^{ad} P_{H_2O}}{P_{H_2}} \right)} \quad (10)$$

avec comme unité des $kmol.kg_{cat}^{-1}.h^{-1}$. Les symboles $P_i$ représentant les pressions partielles en bars.

Les constantes cinétiques $k_i$ sont données par les relations :

$$k_{CO_2} = 1.02E^{15} \exp\left( \frac{-243.9E^3}{RT} \right) \quad (11)$$

$$k_{CO} = 4.225E^{15} \exp\left( \frac{-240.9E^3}{RT} \right) \quad (12)$$

$$k_{RWGS} = 1.955E^6 \exp\left( \frac{-67.13E^3}{RT} \right) \quad (13).$$

et sont exprimées en $kmol.bar^{-1}.kg_{cat}^{-1}.h^{-1}$.

Il est à noter que ces valeurs ont été identifiées pour du reformage entre 400 et 600°C à 2 bars.

Les constantes d'adsorption $K_i^{ad}$ sont quant à elles données par les relations:

$$K_{CO_2}^{ad} = 8.23E^{-5} \exp\left( \frac{-70.65E^3}{RT} \right) \quad (14)$$

$$K_{H_2}^{ad} = 6.12E^{-9} \exp\left( \frac{82.9E^3}{RT} \right) \quad (15)$$

$$K_{CH_4}^{ad} = 6.65E^{-4} \exp\left( \frac{38.28E^3}{RT} \right) \quad (16)$$

$$K_{H_2O}^{ad} = 1.77E^5 \exp\left( \frac{-88.68E^3}{RT} \right) \quad (17)$$

avec comme unité le bar$^{-1}$.

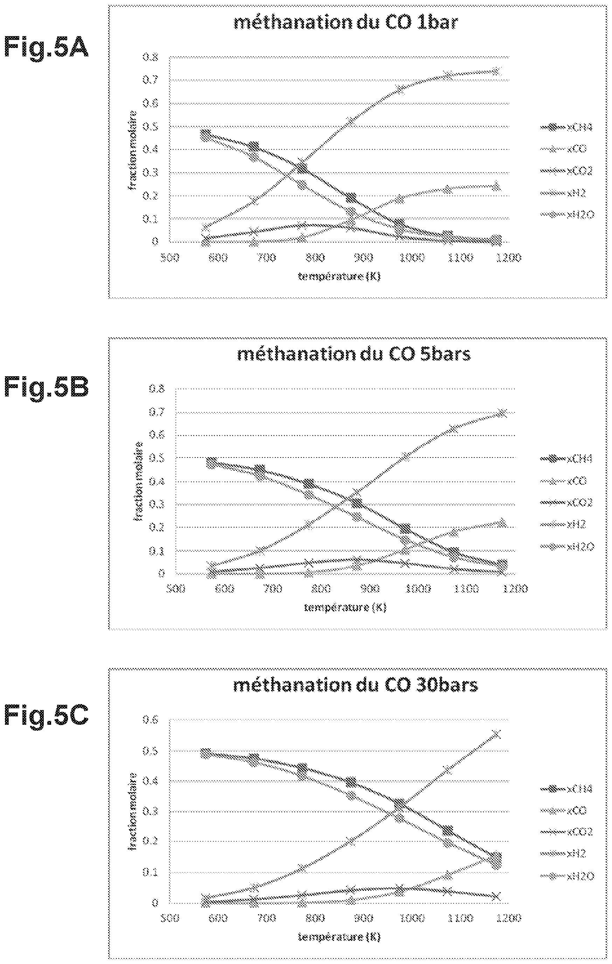

On a représenté aux figures 5A à 5C, les courbes des fractions molaires de chaque espèce obtenue qui ont été calculées comme ci-dessus pour la méthanation du CO à des pressions respectives de 1 bar, 5 bars, et 30 bars.

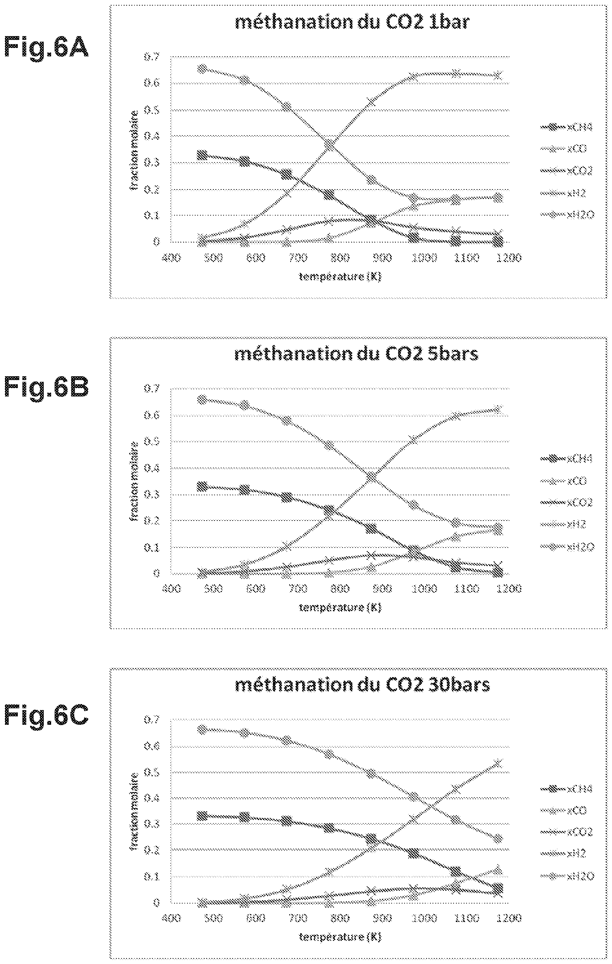

On a représenté aux figures 6A à 6C, les courbes des fractions molaires de chaque espèce obtenue qui ont été calculées comme ci-dessus pour la méthanation du $CO_2$ à des pressions respectives de 1 bar, 5 bars, et 30 bars.

De ces courbes, il résulte que la pression a un fort effet bénéfique sur la méthanation à partir d'une température de 700K. Pour un taux de conversion identique, la pression permet de travailler à des températures supérieures de 250°C par rapport à la pression atmosphérique.

Enfin, quelle que soit la pression, la méthanation du CO est préférable à celle du $CO_2$.

L'invention qui vient d'être décrite, à la fois par des essais et une analyse thermodynamique, permet d'envisager la production de méthane in situ au sein d'un réacteur 1 de type SOEC.

A 600°C et à la pression atmosphérique, la production de méthane est plus importante à partir de CO qu'à partir de $CO_2$.

Dans les conditions expérimentales qui ont été retenues, la production provoque une élévation de température significative de plusieurs degrés, ce qui permet d'envisager le maintien en température d'un réacteur de type SOEC.

Enfin, une méthanation au sein d'un réacteur sous pression permet d'envisager un taux de conversion en méthane supérieur ainsi qu'un maintien à plus haute température.

L'invention n'est pas limitée aux exemples qui viennent d'être décrits ; on peut notamment combiner entre elles des caractéristiques des exemples illustrés au sein de variantes non illustrées.

## Références citées

[1] : Fabien Ocampo et al, « Methanation of carbon dioxide over nickel-based Ce0.72Zr0.28O2 mixed oxide catalysts prepared by sol-gel method», Journal of Applied Catalysis A: General 369 (2009) 90-96 ;

[2]: Dayan Tiang et al, « Bimetallic Ni-Fe total-methanation catalyst for the production of substitute natural gas under high pressure », Journal of Fuel 104 (2013) 224-229.

[3] Eduardo L.G. Oliveira, Carlos A. Grande, Alirio E. Rodrigues, "Effect of catalyst activity in SMR-SERP for hydrogen production": Commercial vs. large-pore catalyst Chemical Engineering Science 66 (2011) 342-354

## Revendications

**1.** Procédé de fonctionnement d'un réacteur (1), dit premier réacteur comportant un empilement de cellules d'électrolyse élémentaires (C1, C2, C3) de type SOEC formées chacune d'une cathode (2.1, 2.2, ...), d'une anode (4.1, 4.2, ...) et d'un électrolyte (3.1, 3.2...) intercalé entre la cathode et l'anode, et une pluralité d'interconnecteurs (5) électrique et fluidique agencés chacun entre deux cellules élémentaires (C1, C2) adjacentes avec une de ses faces en contact électrique avec l'anode (4.1) d'une (C1) des deux cellules élémentaires et l'autre de ses faces en contact électrique avec la cathode (2.2) de l'autre des deux cellules (C2) élémentaires, les cathodes étant en matériau(x) catalyseur(s) de réaction de méthanation,

procédé selon lequel on réalise les étapes suivantes:

a/ on alimente électriquement le premier réacteur et, on alimente et on distribue à chaque cathode soit de la vapeur d'eau $H_2O$, soit un mélange de vapeur d'eau et de dioxyde de carbone $CO_2$, ou on alimente et on distribue de la vapeur d'eau à la cathode d'une des deux cellules élémentaires adjacentes et on alimente et on distribue du dioxyde de carbone à la cathode de l'autre des deux cellules élémentaires, de sorte à réaliser à chaque cathode soit une électrolyse à hautes températures de la vapeur d'eau $H_2O$, soit une co-électrolyse à hautes températures de vapeur d'eau et de dioxyde de carbone,

b/ après l'étape a/ et lorsque le premier réacteur est alimenté avec un niveau de courant électrique insuffisant pour mettre en oeuvre une électrolyse EHT ou une co-électrolyse de H2O et CO2 au sein du premier réacteur, on alimente et on distribue à chaque cathode soit un mélange d'hydrogène $H_2$ et monoxyde de carbone CO, soit un mélange d'hydrogène $H_2$ et de dioxyde de carbone $CO_2$, de sorte à réaliser à chaque cathode une méthanation par catalyse hétérogène.

**2.** Procédé de fonctionnement selon la revendication 1, l'hydrogène $H_2$ ou le mélange d'hydrogène $H_2$ et monoxyde de carbone CO alimentant les cathodes lors de l'étape b/, est produit au préalable lors de l'étape a/.

**3.** Procédé de fonctionnement selon la revendication 1 ou 2, l'étape a/ étant réalisée à des températures comprises entre 600°C et 1000°C.

**4.** Procédé selon l'une des revendications précédentes, l'étape a/ étant réalisée à des pressions comprises entre 0 et 100 bars, de préférence comprise entre 4 et 80 bars.

**5.** Procédé selon l'une des revendications précédentes, l'étape b/ étant réalisée à des pressions comprises entre 0 et 100 bars, de préférence comprise entre 4 et 80 bars.

**6.** Procédé selon l'une des revendications précédentes, les cathodes étant à base de nickel (Ni) supporté par de la zircone ($ZrO_2$) ou de la cérine.

**7.** Procédé selon l'une des revendications précédentes, un gaz drainant, tel que l'air, circulant à chaque anode, lors de l'étape a/.

**8.** Procédé selon l'une des revendications précédentes, un gaz drainant, tel que l'air, circulant à chaque anode, lors de l'étape b/.

**9.** Procédé selon la revendication 8, le débit de gaz drainant à chaque anode est adapté au débit cathodique pour la gestion thermique et l'équilibrage des pressions entre chambres.

**10.** Procédé de production de méthane mettant en oeuvre le procédé de fonctionnement selon l'une des revendications précédentes, comprenant l'étape suivante :

    c/ on alimente, en méthane produit à la sortie du premier réacteur, un deuxième réacteur (6), apte à mettre en oeuvre une méthanation, lorsque le taux de conversion du méthane en sortie du premier réacteur est inférieur à une valeur seuil, puis on alimente en méthane produit à la sortie du deuxième réacteur, un réservoir de stockage ou un réseau de distribution,
    ou
    c'/ on alimente, directement en méthane produit à la sortie du premier réacteur, un réservoir de stockage ou un réseau de distribution.

**11.** Procédé de production de méthane $CH_4$, de préférence selon la revendication 10, à partir d'une source d'énergie dite intermittente, mettant en oeuvre le procédé de fonctionnement selon l'une des revendications 1 à 9, l'étape b/ étant mise en oeuvre lorsque ladite source intermittente n'est plus apte à produire de l'électricité en une quantité suffisante pour réaliser l'étape a/.

**Patentansprüche**

**1.** Verfahren zum Betrieb eines Reaktors (1), als erster Reaktor bezeichnet, der einen Stapel elementarer SOEC Elektrolysezellen (C1, C2, C3), die jeweils durch eine Kathode (2.1, 2.2., ...), eine Anode (4.1, 4.2, ...) und einen zwischen der Kathode und der Anode eingefügten Elektrolyten (3.1, 3.2, ...) gebildet werden, und mehrere elektrische und fluidische Verbinder (5) aufweist, die jeweils zwischen zwei benachbarten elementaren Zellen (C1, C2) angeordnet sind und mit einer ihrer Seiten in elektrischem Kontakt mit der Anode (4.1) einer (C1) der beiden elementaren Zellen stehen und mit der anderen ihrer Seiten in elektrischem Kontakt mit der Kathode (2.2) der anderen der beiden elementaren Zellen (C2) stehen, wobei die Katoden aus einem Material oder Materialien zur Katalyse einer Methanisierungsreaktion gebildet sind,
welches Verfahren die folgenden Schritte aufweist:

    a/ elektrische Versorgung des ersten Reaktors und Zufuhr und Verteilung entweder von Wasserdampf $H_2O$ oder eines Gemisches aus Wasserdampf und Kohlendioxid $CO_2$ an jede Kathode, oder Zufuhr und Verteilung von Wasserdampf an die Kathode einer der beiden benachbarten elementaren Zellen und Zufuhr und Verteilung von Kohlendioxid an die Kathode der anderen der beiden elementaren Zellen, derart, dass an jeder Kathode entweder eine Elektrolyse des Wasserdampfs $H_2O$ bei hoher Temperatur oder eine Co-Elektrolyse von Wasserdampf und Kohlendioxid bei hoher Temperatur stattfindet,
    b/ nach dem Schritt a/ und wenn der erste Reaktor mit einem elektrischen Strom versorgt wird, dessen Stärke nicht ausreicht, eine Elektrolyse EHT oder eine Co-Elektrolyse von $H_2O$ und $CO_2$ im Inneren des ersten Reaktors ins Werk zu setzen, Zuführen und Verteilen entweder eines Gemisches aus Wasserstoff $H_2$ und Kohlenmonoxid CO oder eines Gemisches aus Wasserstoff $H_2$ und Kohlendioxid $CO_2$ an jede Kathode, derart, dass an jeder Kathode eine Methanisierung durch heterogene Katalyse stattfindet.

2. Verfahren nach Anspruch 1, bei dem der Wasserstoff $H_2$ oder das Gemisch aus Wasserstoff $H_2$ und Kohlenmonoxid CO, mit dem die Kathoden in Schritt b/ versorgt werden, zuvor während des Schrittes a/ hergestellt wird.

3. Verfahren nach Anspruch 1 oder 2, bei dem der Schritt a/ bei Temperaturen zwischen 600°C und 1000°C ausgeführt wird.

4. Verfahren nach einem der vorstehenden Ansprüche, bei dem der Schritt a/ bei Drücken zwischen 0 und 100 bar, vorzugsweise zwischen 4 und 80 bar ausgeführt wird.

5. Verfahren nach einem der vorstehenden Ansprüche, bei dem der Schritt b/ bei Drücken zwischen 0 und 100 bar, vorzugsweise zwischen 4 und 80 bar ausgeführt wird.

6. Verfahren nach einem der vorstehenden Ansprüche, bei dem die Kathoden auf der Basis von Nickel (Ni) gebildet sind, auf einem Träger aus Zirkon ($ZrO_2$) oder Ceroxid.

7. Verfahren nach einem der vorstehenden Ansprüche, bei dem in Schritt a/ an jeder Anode ein Trocknungsgas wie etwa Luft zirkuliert.

8. Verfahren nach einem der vorstehenden Ansprüche, bei dem in Schritt b/ an jeder Anode ein Trocknungsgas wie etwa Luft zirkuliert.

9. Verfahren nach Anspruch 8, bei dem der Durchsatz des Trocknungsgases an jeder Anode an die Flussmenge an der Kathode angepasst wird, um die Temperatur zu halten und die Drücke zwischen den Kammern auszugleichen.

10. Verfahren zur Herstellung von Methan mit Hilfe der Betriebsweise nach einem der vorstehenden Ansprüche, mit den folgenden Schritten:

   c/ Zuführen von Methan, das am Ausgang des ersten Reaktors anfällt, zu einem zweiten Reaktor (6), der dazu eingerichtet ist, eine Methanisierung auszuführen, wenn die Konversionsrate von Methan am Ausgang des ersten Reaktors kleiner als ein Schwellenwert ist, anschließendes Zuführen von Methan, das am Ausgang des zweiten Reaktors anfällt, zu einem Speicherbehälter oder einem Verteilungsnetz,
   oder
   c'/ direktes Zuführen von Methan, das am Ausgang des ersten Reaktors anfällt, zu einem Speicherbehälter oder einem Verteilungsnetz.

11. Verfahren zur Herstellung von Methan $CH_4$, vorzugsweise gemäß Anspruch 10, anhand einer als intermittierend bezeichneten Energiequelle, bei dem das Betriebsverfahren nach einem der Ansprüche 1 bis 9 ausgeführt wird, wobei der Schritt b/ ausgeführt wird, wenn die intermittierende Energiequelle nicht mehr in der Lage ist, Elektrizität in einer für die Ausführung des Schrittes a/ ausreichenden Menge zu liefern.

**Claims**

1. A process for operating a reactor (1), termed first reactor, comprising a stack of elemental electrolysis cells (C1, C2, C3) of SOEC type, each formed from a cathode (2.1, 2.2, etc.), an anode (4.1, 4.2, etc.) and an electrolyte (3.1, 3.2, etc.) inserted between the cathode and the anode, and a plurality of electrical and fluid interconnectors (5), each arranged between two adjacent elemental cells (C1, C2) with one of its faces in electrical contact with the anode (4.1) of one (C1) of the two elemental cells and the other of its faces in electrical contact with the cathode (2.2) of the other (C2) of the two elemental cells, the cathodes being made of methanation reaction catalyst material(s), according to which process the following steps are carried out:

   a/ the first reactor is supplied with electricity, and either steam $H_2O$ or a mixture of steam and carbon dioxide $CO_2$ is supplied and distributed to each cathode, or steam is supplied and distributed to the cathode of one of the two adjacent elemental cells and carbon dioxide is supplied and distributed to the cathode of the other of the two elemental cells, so as to carry out, at each cathode, either a high-temperature electrolysis of the steam $H_2O$, or a high-temperature co-electrolysis of steam and carbon dioxide,

b/ after step a/ and when the first reactor is supplied with a level of electric current that is insufficient to carry out an HTE electrolysis or a co-electrolysis of $H_2O$ and $CO_2$ within the first reactor, either a mixture of hydrogen $H_2$ and carbon monoxide CO, or a mixture of hydrogen $H_2$ and carbon dioxide $CO_2$, is supplied and distributed to each cathode, so as to carry out, at each cathode, a methanation by heterogeneous catalysis.

2. The operating process as claimed in claim 1, wherein the hydrogen $H_2$ or the mixture of hydrogen $H_2$ and carbon monoxide CO supplying the cathodes during step b/ is produced beforehand during step a/.

3. The operating process as claimed in claim 1 or 2, step a/ being carried out at temperatures of between 600°C and 1000°C.

4. The process as claimed in one of the preceding claims, step a/ being carried out at pressures of between 0 and 100 bar, preferably of between 4 and 80 bar.

5. The process as claimed in one of the preceding claims, step b/ being carried out at pressures of between 0 and 100 bar, preferably of between 4 and 80 bar.

6. The process as claimed in one of the preceding claims, the cathodes being based on nickel (Ni) supported on zirconia ($ZrO_2$) or ceria.

7. The process as claimed in one of the preceding claims, a draining gas, such as air, circulating at each anode, during step a/.

8. The process as claimed in one of the preceding claims, a draining gas, such as air, circulating at each anode, during step b/.

9. The process as claimed in claim 8, wherein the flow rate of draining gas at each anode is adjusted to the cathode flow rate for the heat management and the equilibration of the pressures between chambers.

10. A process for producing methane implementing the operating process as claimed in one of the preceding claims, comprising the following step:

c/ methane produced at the outlet of the first reactor is supplied to a second reactor (6) suitable for carrying out a methanation, when the degree of conversion of the methane at the outlet of the first reactor is below a threshold value, then a storage reservoir or a distribution network is supplied with methane produced at the outlet of the second reactor,

or

c'/ methane produced at the outlet of the first reactor is directly supplied to a storage reservoir or a distribution network.

11. The process for producing methane $CH_4$, preferably as claimed in claim 10, from an "intermittent" energy source, implementing the operating process as claimed in one of claims 1 to 9, step b/ being carried out when said intermittent source is no longer capable of producing electricity in a sufficient amount to carry out step a/.

# Fig.1

$2H_2$
$(+ H_2O)$

$2H_2O$
$(+ H_2)$

$2O^{2-}$

$O_2$
$(+ \text{gaz drainant})$

$(\text{gaz drainant})$

$4e^-$

$4e^-$

$+$

$-$

1

2  3  4

# Fig.2

Amenée courant

$H_2 + H_2O$

$H_2O$

$O_2$

$H_2O$

Motif élémentaire

C2

C1

5
50
51
5
50

2.2
3.2
4.2
2.1

EP 3 077 574 B1

# Fig.3

$H_2+CO$
ou
$H_2+CO_2$
ou
$H_2,CO_2$
→

| 1 |

→ $CH_4$ →

| 6 |

→ $CH_4$ →

# Fig.4

F

72

73

I

12

air ⇧    ⇩ air    ⇧ air

9

8    4.1

10

3.1

CELLULE $C_1$

2.1

11

7

⇩    ⇧    $H_2+CO$
ou
$H_2+CO_2$    ⇩    71

71

$H_2O,CO_2,H_2CO,N_2$

I

V

70

21

**Fig.5A**

méthanation du CO 1bar

**Fig.5B**

méthanation du CO 5bars

**Fig.5C**

méthanation du CO 30bars

**Fig.6A**

méthanation du CO2 1bar

**Fig.6B**

méthanation du CO2 5bars

**Fig.6C**

méthanation du CO2 30bars

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090289227 A

- FR 1262174

**Littérature non-brevet citée dans la description**

- **FABIEN OCAMPO et al.** Methanation of carbon dioxide over nickel-based Ce0.72Zr0.28O2 mixed oxide catalysts prepared by sol-gel method. *Journal of Applied Catalysis A: General,* 2009, vol. 369, 90-96
- **DAYAN TIANG et al.** Bimetallic Ni-Fe total-methanation catalyst for the production of substitute natural gas under high pressure. *Journal of Fuel,* 2013, vol. 104, 224-229

- **EDUARDO L.G. OLIVEIRA ; CARLOS A. GRANDE ; ALIRIO E. RODRIGUES.** Effect of catalyst activity in SMR-SERP for hydrogen production. *Commercial vs. large-pore catalyst Chemical Engineering Science,* 2011, vol. 66, 342-354